(19)

**Europäisches Patentamt**
**European Patent Office**
**Office européen des brevets**

(11) **EP 4 697 756 A1**

(12) **EUROPEAN PATENT APPLICATION**

(43) Date of publication:
18.02.2026 Bulletin 2026/08

(21) Application number: 25185689.4

(22) Date of filing: 26.06.2025

(51) International Patent Classification (IPC):
*H04S 3/00* (2006.01)   *H04S 7/00* (2006.01)

(52) Cooperative Patent Classification (CPC):
**H04S 7/302;** H04S 3/008; H04S 2420/01

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 27.06.2024 CN 202410848959

(71) Applicant: **Sigfairy Co., Ltd.**
**Shenzhen City Guangdong (CN)**

(72) Inventor: **SUN, Shihong**
**Shenzhen City (CN)**

(74) Representative: **Botti & Ferrari S.p.A.**
**Via Cappellini, 11**
**20124 Milano (IT)**

(54) **METHOD AND APPARATUS FOR SOUNDSTAGE EXTENSION BASED ON THE METHOD HRTF-**

(57)   A computing apparatus with the proposed Method HRTF- for soundstage extension, upon which some inherent issues of the conventional Method HRTF such as the need for pre-measuring or simulating, highly individual dependence, small sweet spot, etc., have been effectively resolved. With the approaches that decoupling the individual-dependent segment from the entire HRTF chain, moving the intersection-point forward outside the ear, and simplifying the frequency response with relative-quantity approximations, the goal- "listening with one's own ear" is achieved with robustness improved and sweet spot enlarged. The present invention can be deployed in diverse scenarios: the stereo speakers; a foundational algorithmic module for advanced applications such as home theater systems, etc.; and an audio file in a particular encoding format can be also generated upon the invention that the soundstage can be extended readily through replaying with conventional stereo speakers.

FIG. 4

EP 4 697 756 A1

**Description**

**TECHNICAL FIELD**

Digital audio signal processing, immersive audio, spatial audio, and virtual reality.

**BACKGROUND**

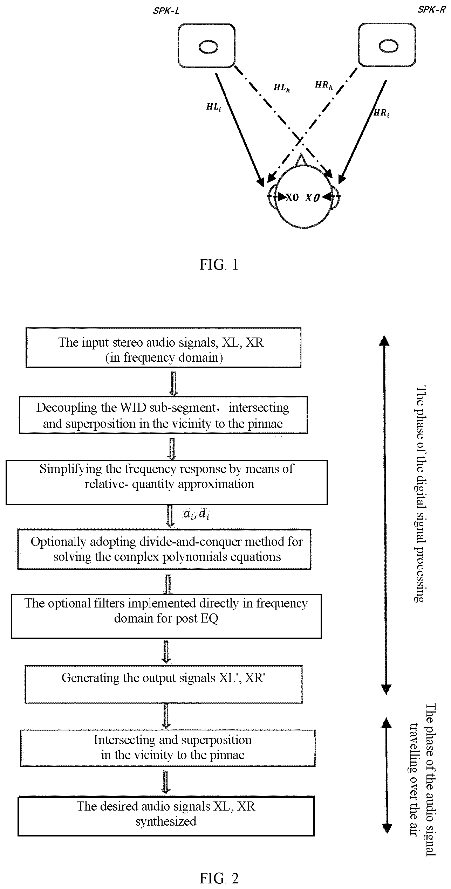

When a two-channel speaker replays stereo audio data, the contralateral signal interferes with the ipsilateral signal, known as crosstalk, as shown in FIG. 1. The existence of crosstalk would corrupt the interaural time difference (ITD) and interaural level difference (ILD) cues that make the binaural stereo effect distorted in a large extent, the localization of the sound source masked largely, the soundstage constrained to the size between the two speakers, and the music sounding pretty dull, and so on, that is so-called "canned effect". To extend or restore such binaural stereo effect, the Head Related Transfer Function (HRTF), an existing conventional method to eliminate crosstalk, has been used. HRTF eliminates the crosstalk by superposing and synthesizing at any intersection-point X0 locating in the ear canal (see FIG. 1, refer to Equation 1 - 2). The soundstage extension is a common term in audio processing, which implies not only the extension of the width of the soundstage, but also including the release of the rest of the spatial information: the depth of the soundstage, the moving-target paths, etc. In the identical application scenario or context, the meaning of the soundstage extension is equivalent to those terms such as soundstage restoration or soundstage enhancement, etc.

The Method HRTF may extend soundstage, but there are some inherent issues. First, HRTF data need to be obtained by measuring or simulating on a person or a dummy head in advance. As a result, there is a problem of "listening with other's ear", that is to say, the binaural stereo effect is distorted and different from individual to individual due to the highly individual-dependent HRTF data, so it's difficult to achieve consistent results, thereby limiting commercial applications. Second, the algorithm implementation is somehow complicated due to it requiring solving the inverse of the HRTF matrix. Third, the method has less robustness for there is only one small sweet spot, rotating head or a small-scale moving would affect the auditory experience such as the localization of the sound source gets blurry.

The existing de-crosstalk algorithm based on HRTF is as follows

$$\left.\begin{array}{c} XL' \cdot HL_i + XR' \cdot HR_h = XL \\ XR' \cdot HR_i + XL' \cdot HL_h = XR \end{array}\right\} \qquad \text{Equation 1}$$

where $XL$ and $XR$ are sound pressures, or desired audio signals synthesized by superposition at any intersection-point X0 in the ear canal, herein set as the digital audio input signals (in frequency domain).
$XL'$ and $XR'$, the solution to be solved and the signals finally fed to the speakers.
$HL_i$, the transfer function related to the signal path from the left speaker to the ipsilateral ear canal.
$HL_h$, the transfer function related to the signal path from the left speaker to the contralateral ear canal.
$HR_i$, the transfer function related to the signal path from the right speaker to the ipsilateral ear canal.
$HR_h$, the transfer function related to the signal path from the right speaker to the contralateral ear canal.
The superscript *i, h* respectively represents the ipsilateral and the contralateral side.
The data of $HL_i$, $HR_h$, $HR_i$ and $HL_h$ are obtained by pre-measuring or simulating in advance.
X0, the intersection-point of the ipsilateral signal and the contralateral signal, which is any point in the ear canal.

$XL'$ and $XR'$ are obtained with the following Equation (in matrix form)

$$[XL' \ XR'] = \begin{bmatrix} HL_i & HR_h \\ HR_h & HL_i \end{bmatrix}^{-1} [XL \ XR]^T \qquad \text{Equation 2}$$

where the superscript -1 represents an inverse matrix and *T* represents a transpose matrix.

**SUMMARY**

The motivation for the invention is to maintain the basic function of the conventional method HRTF in crosstalk elimination for soundstage extension while resolving its inherent issues: the process of pre-measuring or simulating for HRTF data is cumbersome and the results are individually dependent, the algorithm implementation for matrix inversion is relatively complex, there is only one sweet spot, and the robustness is weak for rotating head or a small-scale moving would affect the auditory experience, etc.

To resolve the aforementioned issues, the invention proposes a Method HRTF-, the technical solution adopted is as follows:

A method of extending the soundstage using Method HRTF-, comprising: taking stereo audio source as input signals, decoupling the individual-dependent sub-segment from the entire HRTF chain, moving the intersection-point forward to the vicinity of the pinnae and eliminating crosstalk by superposing and synthesizing in this place, simplifying the transfer function by relative quantity approximation, using a divide-and-conquer method in solving the complex polynomials equations, adopting the filters implemented directly in frequency domain for post EQ. Wherein decoupling the individual-dependent sub-segment is to divide the entire HRTF chain into two sub-segments of frequency response: the sub-segment related to the signal travelling path Over The Air (OTA), the sub-segment related to the signal travelling path With Individual-Dependence (WID), and the data of HRTF is the product of the two sub-segments; moving the intersection-point of the ipsilateral signal and the contralateral signal from the ear canal to the vicinity of the pinnae and eliminating crosstalk here.

Technical characteristics further defined by the present invention comprising:

The aforementioned OTA sub-segment, $HLA_i$, $HLA_h$, $HRA_i$, $HRA_h$, respectively refer to the transfer function, or the frequency response, related to the corresponding signal traveling path over the air from one speaker to the intersection-point X1, which is any point in the vicinity to the pinnae. Wherein, $HLA_i$ is the frequency response related to the signal path from the left speaker to the ipsilateral intersection-point X1; $HLA_h$ is the frequency response related to the signal path from the left speaker to the contralateral intersection-point X1; $HRA_i$ is the frequency response related to the signal path from the right speaker to the ipsilateral intersection-point X1; $HRA_h$ is the frequency response related to the signal path from the right speaker to the contralateral intersection-point X1.

The aforementioned WID sub-segment, $HLP_i$, $HLP_h$, $HRP_i$, $HRP_h$, respectively refer to the transfer function, or the frequency response, related to the corresponding signal traveling path with individual-dependence from pinnae to intersection-point X0, which is any point in the ear cannel. Wherein $HLP_i$ is the WID sub-segment related to the signal path from the left speaker to the ipsilateral intersection-point X0, $HLP_h$ is the WID sub-segment related to the signal path from the left speaker to the contralateral intersection-point X0, $HRP_i$ is the WID sub-segment related to the signal path from the right speaker to the ipsilateral intersection-point X0, $HRP_h$ is the WID sub-segment related to the signal path from the right speaker to the contralateral intersection-point X0.

$HL_i$, the transfer function related to the signal path from the left speaker to the ipsilateral intersection-point X0; $HL_h$, the transfer function related to the signal path from the left speaker to the contralateral intersection-point X0; $HR_i$, the transfer function related to the signal path from the right speaker to the ipsilateral intersection-point X0; $HR_h$, the transfer function related to the signal path from the right speaker to the contralateral intersection-point X0. The relationships among the transfer functions satisfy,

$$
\left.
\begin{aligned}
HL_i &= HLA_i \cdot HLP_i \\
HL_h &= HLA_h \cdot HLP_h \\
HR_i &= HRA_i \cdot HRP_i \\
HR_h &= HLA_h \cdot HLP_h
\end{aligned}
\right\} \quad \text{Equation 5}
$$

The aforementioned about simplifying the transfer function with relative quantity approximation comprises two steps. Step 1, the previously mentioned OTA sub-segment, $HLA_i$, $HLA_h$, $HRA_i$, $HRA_h$, can be simplified with two variables, the delay and amplitude attenuation factor, thereby the sound pressure of each signal at the intersection-point X1 satisfying the follows,

$$
\left.
\begin{aligned}
HLA_i \text{ related path: } & XL'(k) \cdot HLA_i = XL'(k) \cdot a1 \cdot e^{-j2\pi kd1/N} \\
HRA_h \text{ related path: } & XR'(k) \cdot HRA_h = XR'(k) \cdot a2 \cdot e^{-j2\pi kd2/N} \\
HLA_h \text{ related path: } & XL'(k) \cdot HLA_h = XL'(k) \cdot a3 \cdot e^{-j2\pi kd3/N} \\
HRA_i \text{ related path: } & XR'(k) \cdot HRA_i = XR'(k) \cdot a4 \cdot e^{-j2\pi kd4/N}
\end{aligned}
\right\} \quad \text{Equation 6}
$$

wherein

$N$, the number of sampling points under STFT (short-time Fourier transform) process.

$k$, the $k$-th frequency point, and $k \in [0, N - 1]$.

$XL'$ and $XR'$, the solution to be solved and the signals finally fed to the speakers.

$d1$, $d2$, $d3$ and $d4$ , the duration, or the delay, for the signals from one speaker to the corresponding intersection-point X1, the unit is the number of sampling points under a certain sampling rate.

$a1$ , $a2$, $a3$ and $a4$ , the amplitude attenuation factors at the intersection-point X1 for sound pressure of the corresponding signals.

Step 2, based on the first step, taking the amplitude and phase of the reference signal, which is the signal with the shortest path length, as the benchmark, thus the same amount phase and amplitude of the frequency response of each signal is removed, and only the difference part is retained, so as to determine the sound pressure of each signal at the point X1.

For the reference signal itself, the delay and the attenuation factor thereby satisfying:

$$\left. \begin{aligned} dr &= 0 \\ ar &= 1 \end{aligned} \right\} \qquad \text{Equation 7}$$

where the letter $r$ represents the reference signal, and accordingly the delay and attenuation factor of other each signal is determined by comparing the path of the reference signal.

To facilitate the method's implementation in the embodiments, a baseline is defined, which is a connection virtual line between the two speakers, and considering the position of the baseline and the geometry structure among the head and each speaker, the Method HRTF- has roughly three scenarios, and accordingly there are three algorithms' types: intra-baseline symmetry, intra-baseline asymmetry, extra-baseline asymmetry.

(1) Intra-baseline symmetry, or the head is near the central axis of the base line. There are following relationships,

$$\left. \begin{aligned} HLA_i &= HRA_i \\ HLA_h &= HRA_h \end{aligned} \right\} \qquad \text{Equation 8}$$

Taking the path of the ipsilateral signal (with the shortest path) as the reference, based on Equation 7-8; and referred to Equation 1 and Equation 6, accordingly the de-crosstalk algorithm at the point X1 is as follows:

$$\left. \begin{aligned} XL'(k) + XR'(k) \cdot a \cdot e^{-j2\pi kd/N} &= XL(K) \\ XR'(k) + XL'(k) \cdot a \cdot e^{-j2\pi kd/N} &= XR(K) \end{aligned} \right\} \qquad \text{Equation 9}$$

In the Equation,

$XL$ and $XR$, the input signals in frequency domain.
$a$ , the amplitude attenuation factor of the sound pressure of the contralateral signal at the intersection-point X1 with respect to the reference.
$d$ , the delay of the contralateral signal at the intersection-point X1 with respect to the reference.

(2) Intra-baseline asymmetry, and take that the head is in the right side of the baseline as example, taking $HRA_i$ related path (the shortest one) as the reference, accordingly the de-crosstalk algorithm is as follows:

$$\left. \begin{aligned} XL'(k) \cdot a1 \cdot e^{-j2\pi kd1/N} + XR'(k) \cdot a2 \cdot e^{-j2\pi kd2/N} &= XL(K) \\ XR'(k) + XL'(k) \cdot a3 \cdot e^{-j2\pi kd3/N} &= XR(K) \end{aligned} \right\} \qquad \text{Equation 10}$$

In the Equation,

$a1$ and $d1$ , the amplitude attenuation factor and the delay variable for $HLA_i$ related path with respect to the reference.
$a2$ and $d2$ , the amplitude attenuation factor and the delay variable for $HRA_h$ related path with respect to the reference.
$a3$ and $d3$ , the amplitude attenuation factor and the delay variable for $HLA_h$ related path with respect to the reference.

Extra-baseline asymmetry, and take that the head is to the right side of the baseline as example, taking $HRA_h$ related path (the shortest one) as the reference, accordingly the de-crosstalk algorithm is as follows:

$$XL'(k) \cdot a1 \cdot e^{-j2\pi k d1/N} + XR'(k) = XL(K)$$
$$XL'(k) \cdot a3 \cdot e^{-j2\pi k d3/N} + XR'(k) \cdot a4 \cdot e^{-j2\pi k d4/N} = XR(K)$$

Equation 11

In the Equation,

$a1$ and $d1$ , the amplitude attenuation factor and the delay variable for $HLA_i$ related path with respect to the reference.
$a3$ and $d3$ , the amplitude attenuation factor and the delay variable for $HLA_h$ related path with respect to the reference.
$a4$ and $d4$ , the amplitude attenuation factor and the delay variable for $HRA_i$ related path with respect to the reference.

An apparatus for soundstage expansion, comprising: an audio signal input unit, an audio signal processing unit, and a stereo playback unit. Wherein:

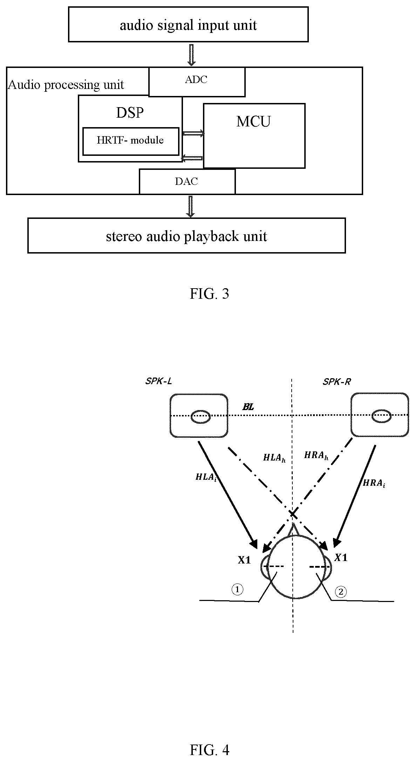

(1) The audio signal input unit comprises: a basic input interface configured to receive wired analog audio signals from external devices; and an optional extended input interface configured to receive digital audio signals from wireless signal sources, or pre-stored digital audio signals from non-volatile memory. Among them, the basic input interface (as shown in Figure 3) is connected to the analog-to-digital converter (ADC) module in the downstream audio signal processing unit, while the optional extended input interface is connected to the data input interface of the audio signal processing unit.

(2) The audio signal processing unit includes one or more programmable signal processing circuits, such as a DSP (Digital Signal Processor), CPU, or MCU (Microcontroller Unit). As shown in Figure 3, the disclosed embodiment of the present invention adopts a dual-programmable-signal-processor architecture, which consists of: (i) Main Processing Module (DSP Module) - Configured to execute audio signal processing algorithms and operably implement an audio signal processing pipeline via the audio data channel. (ii) Control Module (MCU Module) - Configured to manage the operational state of the main processing module and handle user interactions. (iii) Interaction channel - Configured for the control module to issue commands (e.g., start/stop control) to the main processing module.

(3) The stereo playback unit, as shown in Figure 3 comprises: A basic configuration of two speaker modules; and optionally configured extended speaker modules. Wherein the basic-configuration speaker modules each comprise: a power amplifier circuit connected to an upstream digital-to-analog conversion (DAC) module; and an electroacoustic transducer connected to said power amplifier circuit. In this configuration: The two speaker modules are respectively designated for processing left-channel and right-channel signals. The optionally configured extended speaker modules: share identical functional structures with the basic-configuration speaker modules; form a multi-channel output array, with each extended module operating as an independent output channel. Wherein the DSP module performs audio signal processing according to the soundstage extension method described herein.

The beneficial effects of the present invention are as follows: upon the proposed method HRTF-, the signals intersect and get crosstalk eliminated in the vicinity to the pinnae, thus only the OTA sub-segment data is utilized and the WID sub-segment is decoupled. As a result, there is no need of strict pre-measurement for HRTF data, and the goal - "listening with one's own ear" is achieved; The frequency response of the OTA sub-segment is simplified by the relative quantity approximation method, upon which the auditory experience, within a certain range, is no longer sensitive to the distance, the sweet spot and the robustness has also been improved; A divide-and-conquer method in solving the complex polynomials equations and the filters implemented directly in frequency domain for post EQ are also optionally adopted. Upon these approaches, the computational complexity is reduced, and the invention facilitates its implementation in DSP and deployment in various application scenarios, and has broad commercial prospects.

The present invention provides noticeable improvements while maintaining a highly immersive experience: the method not only highly restores the spatial information of the soundstage, such as width, depth, moving targets, for example, the soundstage width may extend beyond 170 degrees at maximum; but also, effectively restores the timbral information of the sound sources, including high-order harmonics (or overtones). These result in effectively addressing the aforementioned "canned effect" and sounding open and brilliant. One may rotate the head or make small movements, moving laterally within tens of centimeters or moving forward / backward within approximately 2 meters, e.g., without significantly affecting the auditory perception, which exhibits strong robustness.

The invention is designed to use stereo audio source as the input signal, and the processed outputs can be replayed through dual-channel or speaker array to achieve immersive auditory experience, including but not limited to the following various application scenarios: the device with stereo speakers such as TV, laptop, etc., or being as the foundational algorithmic module for higher order applications such as the sound bar, the domestic home movie theater, the car audio system, or AR, VR, etc. And based on the present invention, a particular encoded format of audio file can also be generated, upon which the soundstage can be extended readily by the replay through conventional stereo speakers without any extra processing.

## BRIEF DESCRIPTION OF THE DRAWINGS

FIG. 1 illustrates the process of the crosstalk elimination based on the conventional method HRTF.

FIG. 2 illustrates the processing flow based on the proposed method HRTF-.

FIG. 3 illustrates a device structure in accordance with an embodiment of the invention.

FIG. 4 illustrates the process for the crosstalk elimination in accordance with an embodiment of the invention in the presence of a symmetric geometrical structure that the head is near the central axis of the baseline.

FIG. 5 illustrates the process for the crosstalk elimination in accordance with an embodiment of the invention in the presence of an asymmetric geometrical structure that the head is in the right side of the baseline and taking $HRA_i$ related signal path as reference.

FIG. 6 illustrates the process for the crosstalk elimination in accordance with an embodiment of the invention in the presence of an asymmetric geometrical structure that the head is in the right side to the base line and taking $HRA_h$ related signal path as reference.

## DETAILED DESCRIPTION OF THE EMBODIMENTS

The present invention is further explained in combination with the attached drawings and the embodiment. The purposes of the proposed embodiments are just for better understanding the principles and the implementation of the Method HRTF-, they are not aiming at exhausting or limiting the detailed forms disclosed about the invention, so it is feasible to do some modifications about the proposed embodiment in accordance with a particular application scenario. The present invention proposes a Method HRTF-to extend the soundstage, herein the term "HRTF-" means a simplified version of the conventional Method HRTF, the motivation is to extend the soundstage extension and obtain immersion experience while resolving the inherent issues induced by HRTF. As shown in FIG. 2, the process to eliminate the crosstalk based on the present invention, or the method HRTF-, comprises two phases: the phase of digital signal processing, the phase of the audio signal travelling over the air. The first phase comprises the following operations: taking the stereo audio source as input signal, decoupling the WID sub-segment from the entire HRTF chain, eliminating the signals' crosstalk by intersecting and superposing in the vicinity to the pinnae, not intersecting in the ear cannel as the method HRTF does, simplifying the frequency response with relative-quantity approximation, utilizing a divide-and-conquer method to solve the real and imaginary part respectively for the complex polynomials equations, adopting the filters implemented directly in frequency domain for post equalization (EQ). $a_i$ and $d_i$ (also in FIG. 2), respectively representing an attenuation factor and a delay variable of the $i$-th signal with respect to the reference signal path, are adjustable parameters to match a particular geometrical structure with respect to the listener and each speaker. For the second phase, the output signals, or the final solution to the algorithm, after being replayed through the speakers, traveling and interacting with the actual frequency responses over the air, getting the crosstalk eliminated at intersection-point X1, and the desired audio signals, XL and XR, are obtained here.

The invention divides the frequency responses of the entire HRTF chain into two segments (referred to FIG. 4): the sub-segment related to the path the signal travelling Over The Air (OTA) and the sub-segment related to the path the signal travelling With Individual Dependence (WID), the data of entire HRTF is the product of the two sub segments (as shown in Equation 5).

(1) the OTA sub-segments of the entire HRTF chain, $HLA_i$, $HLA_h$, $HRA_i$, $HRA_h$, respectively referring to the transfer function, or the frequency response, related to the corresponding path the signal traveling over the air from one speaker to the corresponding intersection-point X1, which is any point in the vicinity to the pinnae.

(2) the WID sub-segments of the entire HRTF chain, $HLP_i$, $HLP_h$, $HRP_i$, $HRP_h$, respectively referring to the transfer function, or the frequency response, of the corresponding path the signal traveling with individual dependence from one side pinnae to the corresponding intersection-point X0, which is any point in the ear cannel, and this sub-segment is highly individual dependance. Combined with FIG. 1, the relationships among the transfer functions are as follows:

$$HL_i = HLA_i \cdot HLP_i$$
$$HL_h = HLA_h \cdot HLP_h$$
$$HR_i = HRA_i \cdot HRP_i \qquad \text{Equation 5}$$
$$HR_h = HLA_h \cdot HLP_h$$

As shown in FIG 4:

X1, the intersection-point of the ipsilateral signal and the contralateral signal, which is any point in the vicinity to the ear.

$HLA_i$, the OTA sub-segment, which is the frequency response related to the path from the left speaker to the ipsilateral intersection-point X1.

$HLA_h$, the OTA sub-segment, which is the frequency response related to the path from the left speaker to the contralateral intersection-point X1.

$HRA_i$, the OTA sub-segment, which is the frequency response related to the path from the right speaker to the ipsilateral intersection-point X1.

$HRA_h$, the OTA sub-segment, which is the frequency response related to the path from the right speaker to the contralateral intersection-point X1.

$HLP_i$, the WID sub-segment of the entire HRTF chain related to the path from the left speaker to the ipsilateral intersection-point X0.

$HLP_h$, the WID sub-segments of the entire HRTF chain related to the path from the left speaker to the contralateral intersection-point X0.

$HRP_i$, the WID sub-segment of the entire HRTF chain related to the path from the right speaker to the ipsilateral intersection-point X0.

$HRP_h$, the WID sub-segments of the entire HRTF chain related to the path from the right speaker to the contralateral intersection-point X0.

The dashed lines, shown with ① and ② , respectively illustrate the WID sub-segments, $HLP_i$, $HRP_h$ ; $HRP_i$, $HLP_h$, related to the corresponding paths.

$BL$ , the baseline, a virtual line connecting the outer sides of the two speakers, namely the dashed line BL.

Upon the above approaches, the WID sub-segment is decoupled from the entire HRTF chain, the intersection point of the ipsilateral signal and the contralateral signal is moved forward to any point in the vicinity to the pinnae from any point in the ear cannel, and the crosstalk is eliminated by superposing and synthesizing in the new intersection point. As a result, the crosstalk-elimination process based on the method HRTF- utilizes only the OTA sub-segment, it is not relevant to the WID part, thereby decoupling the WID sub-segment from the entire HRTF chain, thus the issue of individual-dependence is resolved. After the crosstalk is eliminated in the vicinity to the pinnae, with the help of the pinnae and the rest of the ear-brain system, the spatial information of the signal such as distance, localization, etc., would be perceived, thereby achieving the goal-"listening with one's own ear".

Adopting a relative-quantity approximation to simplify the transfer function, or the frequency response, of the OTA sub-segment:

Considering reflections and reverberations, and other interferences, the transfer function, or the frequency response related to each frequency point of an audio signal that travels over a certain distance or at a certain incident angle in a room, in a strict sense, is different. However, in terms of the auditory experience and in most cases, within a certain distance (for example, 2 meters around), the effect of distance on auditory perception is manifested as changes in sound pressure level (SPL), which can be approximately described by the amplitude attenuation and delay, thereby ignoring the detailed changes of the frequency response induced by the interferences. Thus, the OTA sub-segment would be simplified, and the sound pressure of each signal at the intersection-point X1 satisfies the follows,

$$HLA_i \text{ related path: } XL'(k) \cdot HLA_i = XL'(k) \cdot a1 \cdot e^{-j2\pi k d1/N}$$
$$HRA_h \text{ related path: } XR'(k) \cdot HRA_h = X'(k) \cdot a2 \cdot e^{-j2\pi k d2/N}$$
$$HLA_h \text{ related path: } XL'(k) \cdot HLA_h = XL'(k) \cdot a3 \cdot e^{-j2\pi k d3/N} \qquad \text{Equation 6}$$
$$HRA_i \text{ related path: } XR'(k) \cdot HRA_i = XR'(k) \cdot a4 \cdot e^{-j2\pi k d4/N}$$

wherein

*N* , the length of sampling points under STFT (short-time Fourier transform) process.

*k* , the *k*-th frequency point, and $k \in [0, N-1]$.

*d1, d2,* d3 and *d4* , the duration, or the delay, for the signals from one speaker to the corresponding point X1, the unit is the number of sampling points under a certain sampling rate.

*a*1 , *a2, a*3 and *a*4 , the amplitude attenuation factors at the point X1 for sound pressure of the corresponding signals.

Further, considering that the ITD cues of the audio signals would be largely unaffected when each signal undergoes the same amount of phase change, the sound pressure at the point X1 may be further simplified by referring to a signal with the shortest path, that is the relative-quantity approximation. Upon this approach, the same amount phase and amplitude of the frequency response of each signal is removed, and only the difference part is retained, so as to further simplify the transfer function of the OTA sub-segment, and thereby determining the sound pressure of each signal at the point X1 (combined with different scenarios, detailed analysis will be presented later).

For the reference signal itself, the delay and the attenuation factor thereby satisfying:

$$\left. \begin{array}{l} dr = 0 \\ ar = 1 \end{array} \right\} \qquad \text{Equation 7}$$

where the letter *r* represents the reference signal, and accordingly the delay and attenuation factor of other each signal is determined by comparing the path of the reference signal. These approximation methods make the auditory experience, within a certain distance (for example, 2 meters around), is no longer sensitive to the change of distance, the sweet spot is enlarged and the robustness of the algorithm is improved. The values of the delay variables and attenuation factors can be obtained through experiments.

The detailed algorithm implementation for crosstalk-elimination:

Considering the position of the baseline and the geometry structure among the head and each speaker, the method HRTF-has roughly three scenarios, and accordingly three corresponding crosstalk elimination algorithms are provided: intra-baseline symmetry, intra-baseline asymmetry, extra-baseline asymmetry. The distinction between the above three scenarios typically corresponds to the listener's preferred position or is due to constraints of the scenario, where the listener's position is relatively fixed. For intra-baseline symmetry scenarios, the listener typically prefers a position near the central axis of the baseline and enjoys relatively free movement. They can usually move freely forward, backward, left, or right within the space between the two loudspeakers. This applies to usage scenarios such as portable speakers, TVs, computers, etc.; For intra-baseline asymmetry scenarios, the listener's position is typically fixed and not easily adjustable. The listener is usually located off the central axis of the baseline, favoring one side of the baseline, as seen in environments like car cabins; In extra-baseline asymmetry scenarios, the listener's position is typically located outside the baseline of the two speakers and is relatively fixed or not easily adjustable. Although this configuration is less common, its algorithmic advantage lies in allowing a narrower baseline in situations where a wider one would be impractical, thereby improving the flexibility of speaker placement.

(1) Intra-baseline symmetry type

As shown in FIG. 4, an embodiment of baseline-internal symmetric type, that is, the head is near the central axis of the baseline. The corresponding crosstalk elimination algorithm is detailed in Equations 8 and 9. Its effects are as follows: When the listener's head is near the central axis of the baseline, the spatial attributes (e.g., soundstage width, depth) are rendered with high fidelity. The perceived soundstage width can exceed 170 degrees, with its center anchored directly in front of the listener-a natural and preferred orientation for human auditory perception.

When the listener moves forward or backward along the central axis of the baseline within a range of approximately 2 meters, the perceived soundstage width and image centrality remain stable without significant changes. This demonstrates the algorithm's strong robustness;

When the listener moves laterally within a small range relative to the baseline's central axis (not exceeding the baseline width), such as shifting by roughly the width of a head, the soundstage width and soundstage center show no significant changes.

When the speakers spacing is wide and the listener moves laterally beyond one head width from the central axis, the soundstage on the corresponding side gradually narrows, while the opposite side remains largely unchanged. The perceived center of the sound image will shift toward the opposite side. However, throughout this lateral movement, the soundstage transitions smoothly and stably, with no abrupt positional jumps in audio imaging, resulting in a natural listening experience.

$$HLA_i = HRA_i$$
$$HLA_h = HRA_h \qquad \text{Equation 8}$$

Taking the path of the ipsilateral signal (with the shortest path) as the reference, based on Equation 7-8; and referred to Equation 1 and Equation 6, the de-crosstalk algorithm at the point X1 is as follows:

$$XL'(k) + XR'(k) \cdot a \cdot e^{-j2\pi kd/N} = XL(K)$$
$$XR'(k) + XL'(k) \cdot a \cdot e^{-j2\pi kd/N} = XR(K) \qquad \text{Equation 9}$$

wherein

$XL$ and $XR$, the desired audio signals in frequency domain, herein set as the digital audio input signals.
$XL'$ and $XR'$, the audio output signals in frequency domain, or the solution to be solved and the signals finally fed to the speakers.
$a$ , the amplitude attenuation factor of the sound pressure of the contralateral signal at the intersection-point X1 with respect to the reference.
$d$ , the delay of the contralateral signal at the intersection-point X1 with respect to the reference.

(2) intra-baseline asymmetry type

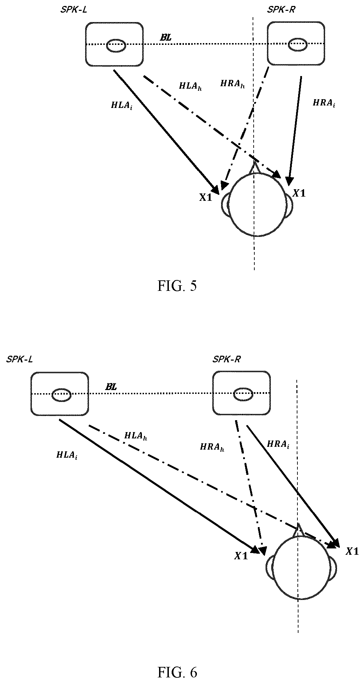

As shown in FIG. 5, an embodiment of baseline-internal asymmetric type that takes the head is in the right side of the baseline as an example, and taking $HRA_i$ related path (the shortest one) as the reference. The corresponding crosstalk elimination algorithm is as Equation 10. This scenario is suitable for configurations with wide speakers spacing, particularly when the baseline exceeds approximately two head widths. Its effects are as follows:
As previously described, when the listener moves toward one speaker-deviating significantly from the central axis (e.g., >1 head width)-the soundstage gradually narrows perceptually, and the image center shifts away from the frontal midline. Equation 10's algorithm mitigates this by steering the image center, effectively recentering the laterally shifted sound image to the frontal position.

$$XL'(k) \cdot a1 \cdot e^{-j2\pi kd1/N} + XR'(k) \cdot a2 \cdot e^{-j2\pi kd2/N} = XL(K)$$
$$XR'(k) + XL'(k) \cdot a3 \cdot e^{-j2\pi kd3/N} = XR(K) \qquad \text{Equation 10}$$

In the Equation,

$a1$ and $d1$ , the amplitude attenuation factor and the delay variable for $HLA_i$ related path with respect to the reference path.
$a2$ and $d2$ , the amplitude attenuation factor and the delay variable for $HRA_h$ related path with respect to the reference path.
$a3$ and $d3$ , the amplitude attenuation factor and the delay variable for $HLA_h$ related path with respect to the reference path.

(3) Extra-baseline asymmetry type

This scenario applies when the listener's head is located outside the baseline, as illustrated in Figure 6, which specifically demonstrates a right-offset case and taking $HRA_h$ related path (the shortest one) as the reference.
The corresponding crosstalk elimination algorithm is as Equation 11. When the head is positioned outside the baseline (e.g., offset to the right), the sound image center localizes entirely on the contralateral (left) side of the head. The aim of the Algorithm in Equation 11 is to steer the deviated sound image center back toward the frontal midline, or at least achieve noticeable improvement in frontal localization.
Currently, the steering capability of this algorithm remains limited and falls short of expectations, primarily due to the speaker directivity constraints-particularly the severe high-frequency attenuation at large incident angles, which causes significant frontal image deviation. Further optimizations are required, with key improvement directions likely including: adjusting loudspeaker angulation, implementing high-frequency compensation, etc., to address the current technical limitations.

$$XL'(k) \cdot a1 \cdot e^{-j2\pi kd1/N} + XR'(k) = XL(K)$$
$$XL'(k) \cdot a3 \cdot e^{-j2\pi kd3/N} + XR'(k) \cdot a4 \cdot e^{-j2\pi kd4/N} = XR(K)$$

Equation 11

In the Equation,

$a1$ and $d1$ , the amplitude attenuation factor and the delay variable for $HLA_i$ related path with respect to the reference path.

$a3$ and $d3$ , the amplitude attenuation factor and the delay variable for $HLA_h$ related path with respect to the reference path.

$a4$ and $d4$ , the amplitude attenuation factor and the delay variable for $HRA_i$ related path with respect to the reference path.

A divide-and-conquer method is optionally used to solve the real and imaginary part respectively in the algorithm implementation:

Take symmetry type as an example and referring to Equation 9. Due to the final solutions, $XL'(k)$ and $XR'(k)$, both containing a real and an imaginary part, taking it as a goal that, with limited steps of derivation, the polynomials of Equation 9 would be finally represented respectively with a format of a real and an imaginary part (see Equation 12), so as to convert the complex exponential polynomial term to basic arithmetic operations. In this way, the algorithm complexity is greatly reduced compared with the matrix inversing process of the HRTF (Equation 4).

$$XL'_m(k) \propto (XL(k), XR(k), a, d, k)$$
$$XL'_r(k) \propto (XL(k), XR(k), a, d, k)$$
$$XR'_m(k) \propto (XL(k), XR(k), a, d, k)$$
$$XR'_r(k) \propto (XL(k), XR(k), a, d, k)$$

Equation 12

wherein, the left side of the related symbol "$\propto$" is the variable to be solved out, and the right side are the given variables. The subscript $m$ and $r$ respectively represent the imaginary and the real part item.

The filters implemented directly in frequency domain for post EQ are optionally adopted:

The error caused by the approximation algorithm, compared with the actual frequency response over the air, will induce spectrum fluctuation which would yield distortion, so the post process such as equalization (EQ) is needed. The filters such as infinite impulse response (IIR), or finite impulse response (FIR) for post EQ are usually used in some audio processing application, yet the IIR or FIR implementation would consume somehow much memory or computing resources. The present invention proposes an optional frequency-domain direct EQ method, which operates directly on the amplitude-frequency response at each frequency point. This approach preserves linear phase characteristics (ensuring unaffected ITD cues), while maintaining low computational overhead.

Equation 13 demonstrates a practical application of the frequency-domain direct EQ method, implementing a low-pass filtering:

$$G(k) = s \cdot \log (f(k)/fl)/log2$$
$$g(k) = 10^{G(k)/20}$$

Equation 13

wherein,

$k$ , an index of the frequency point.

$s$ , the rolloff rate, and the unit is dB/octave.

$f$ , the frequency of the corresponding frequency point.

$fl$ , the cut-off frequency of low-pass filtering.

$G$ , the attenuation variable of the corresponding frequency point, and the unit is dB.

$g$ , the gain of the corresponding frequency point, and the unit is in multiples.

To conserve computational resources, the gain sequence g can be precomputed according to Equation 13 and stored in memory for real-time lookup during operation.

The apparatus for soundstage extension based on the Method HRTF-, comprising: an audio signal input unit, an audio signal processing unit, a stereo audio playback unit:

(1) The audio signal input unit comprises: a wired input method and optionally a wireless input method, optionally a non-volatile storage device input method. Herein, the wired input method serves as the basic input method, while the wireless input method and non-volatile storage device serve as optional extended input methods. (a) The wired input method, as shown in Figure 3, receives analog audio signals from external devices through a basic input interface (such as an audio jack, USB interface, etc.). The signal transmission path is as follows: the analog signal from the external device is transmitted to the input unit via the physical interface (e.g., TRS/TS, etc.), then converted into a digital signal by a downstream analog-to-digital conversion module (ADC), which serves as the input for the subsequent audio processing unit. (b) The wireless input method employs a wireless communication module (e.g., Bluetooth, Wi-Fi, etc.) to receive digital audio streams transmitted from external devices. The signal transmission path is as follows: after receiving the digital signal, the wireless module decodes it through a decoding circuit, then transmits the decoded signal to the downstream audio processing unit via an extended input interface (such as an I2S audio bus). (c) The non-volatile storage input method reads pre-stored digital audio files from built-in storage media (e.g., FLASH chips/SD card slots). The signal transmission path is as follows: the storage unit reads the audio files, decodes them through a decoding circuit, and then transmits the decoded data to the downstream audio processing unit via an extended input interface (such as an I2S audio bus).

(2) The data processing unit comprises one or more programmable signal processing circuits, such as DSPs, CPUs, etc. Based on the number of programmable signal processing circuits, the data processing unit can operate in either a multi-programmable-signal-processing-circuit mode or a single-programmable-signal-processing-circuit mode. Wherein the multi-programmable-signal-processing-circuit mode comprises: (a) A main processing module, which primarily includes: (i) An audio data channel, connected to ADC/DAC conversion interfaces via an internal bus, implementing an audio signal processing pipeline (ADC → internal bus → algorithm processing → internal bus → DAC). (ii)Arithmetic coprocessor - including but not limited to arithmetic subunits and program control subunits. (iii) memory buffers (such as RAM), which store intermediate data during audio processing. (iv) control interface register sets, etc. (b) A control module, primarily comprising: a control processor; interface circuits (e.g., buttons) for human interaction. (c) Integrated or Standalone Non-Volatile Memory (e.g., Flash). (d) Interaction channel, comprising at least one of: shared memory region; physical transmission medium (e.g., GPIO).

The aforementioned the single programmable signal processing circuit mode mainly comprises: integrated processor core (supporting both data processing and control functions); audio data transmission channel (including: audio processing pipeline, hardware-supported double buffering mechanism); internal interconnect bus (comprising data bus and control bus).

The embodiment shown in Figure 3 adopts a dual-programmable-digital-processing-circuit architecture. (i) The main processing module is implemented using a digital signal processor (DSP), referred to as the DSP module, primarily comprising: a time-frequency domain data buffer (e.g., RAM); an associated non-volatile memory (e.g., Flash); a core processing submodule, coupled to said time-frequency domain data buffer and associated non-volatile memory; an arithmetic subunit; An audio data channel, supporting at least one of the following protocols: I2S/TDM/PDM, with clock synchronization and serial/parallel conversion circuits, connected to ADC/DAC via an internal bus. (ii) The control module is implemented using a microcontroller unit (MCU), referred to as the MCU module, primarily comprising: a user configuration interface (e.g., UART/I2C); DSP control register sets (including start/stop bits, operation mode selection, etc.). (iii) An interaction channel, including at least one of: a shared memory area; a GPIO connection channel for data interaction with the DSP.

(3) The stereo playback unit, as shown in Figure 3, comprises a basic configuration formed by two speaker modules, each including: (a) A power amplifier circuit, operatively connected to a digital-to-analog converter (DAC) module, configured to amplify the corresponding analog audio channel signal. (b) An electroacoustic transducer, electrically coupled to the power amplifier circuit, configured to convert the amplified signal into acoustic output. In the basic configuration: One speaker module is designated for processing left-channel signals, the other speaker module is designated for processing right-channel signals. The architecture supports optional expansion by integrating additional speaker modules to form a multi-channel output array, wherein each added module: Shares the identical functional structure with the basic speaker modules; Operates as an independent output channel.

In conclusion, the present invention adopts a method HRTF-, a simplified version of the conventional HRTF method, to eliminate crosstalk, thereby achieving soundstage extension when the processed signal is replayed through dual-channel speakers (or optional speaker array), and providing immersive experience. Compared with the conventional method HRTF, the method HRTF- can effectively eliminate crosstalk without requiring strict HRTF measurements, and achieving the goal - "listening with one's own ear", thereby demonstrating consistent performance across different individuals; the method not only highly restores the spatial information of the soundstage, such as width, depth, moving targets, for example, the soundstage width may extend beyond 170 degrees at maximum. The timbral information of the sound sources, including high-order harmonics (or overtones), is also effectively restored, thereby sounding open and brilliant; the sweet spot is enlarged much, one may rotate the head or make small movements (e.g., moving laterally within tens of centimeters or moving forward / backward within approximately 2 meters) without significantly affecting the auditory perception, which exhibits strong robustness; the computational complexity is reduced, facilitates DSP implementation , and enables deployment across diverse application scenarios, demonstrating broad commercial potential.

**Claims**

1. A method of soundstage extension using method HRTF-, comprising: taking a stereo audio source as an input signal, decoupling WID sub-segment from entire HRTF chain, eliminating crosstalk by intersecting in vicinity to pinnae, simplifying a frequency response with relative-quantity approximations, utilizing a divide-and-conquer method to solve complex polynomials equations, adopting filters implemented directly in a frequency domain for post EQ wherein decoupling the WID sub-segment from the entire HRTF chain is to divide the entire HRTF chain into two segments: a sub-segment of the frequency response related to a signal travelling path with individual dependence, and another sub-segment of the frequency response related to a signal travelling path over the air, the data of the entire HRTF chain is the product of two sub-segments, with these approaches to relocate an intersection-point of an ipsilateral and a contralateral signal from ear cannel to the vicinity to the pinnae, thereby realizing the crosstalk elimination in this new place.

2. The method of soundstage extension using method HRTF- in accordance with claim 1, comprising: wherein OTA sub-segments, $HLA_i$, $HLA_h$, $HRA_i$ and $HRA_h$, respectively referring to the frequency response related to the corresponding signal traveling path over the air from a left speaker to an ipsilateral intersection-point X1, from the left speaker to a contralateral intersection-point X1, from a right speaker to the ipsilateral intersection-point X1, and from the right speaker to the contralateral intersection-point X1;

   wherein the WID sub-segments, $HLP_i$, $HLP_h$, $HRP_i$ and $HRP_h$, respectively referring to the frequency response related to corresponding signal traveling path from one side pinnae to corresponding intersection-point X0, wherein $HLP_i$ , referring to the WID sub-segment of the entire frequency response from the left speaker to the ipsilateral intersection-point X0; $HLP_h$, referring to the WID sub-segment of the entire frequency response from the left speaker to contralateral intersection-point X0; $HRP_i$ , referring to the WID sub-segment of the entire frequency response from the right speaker to the ipsilateral intersection-point X0; $HRP_h$ , referring to the WID sub-segment of the entire frequency response from the right speaker to the contralateral intersection-point X0; wherein the frequency response, $HL_i$ $HL_h$, $HR_i$, $HR_h$, respectively referring to the entire frequency response related to the corresponding signal traveling path from the left speaker to the ipsilateral intersection-point X0, from the left speaker to the contralateral intersection-point X0, from the right speaker to the ipsilateral intersection-point X0, from the right speaker to the contralateral intersection-point X0, which are the product of two sub-segments as follows,

$$\left. \begin{array}{l} HL_i = HLA_i \cdot HLP_i \\ HL_h = HLA_h \cdot HLP_h \\ HR_i = HRA_i \cdot HRP_i \\ HR_h = HLA_h \cdot HLP_h \end{array} \right\} \quad \text{Equation 5}$$

3. The method for soundstage extension of the method HRTF- in accordance with the claim 2, comprising: wherein simplifying the frequency response with relative-quantity approximation is that the TPOTA sub-segment $HLA_i$, $HLA_h$, $HRA_i$, $HRA_h$, or sound pressure, can be approximately described by an amplitude attenuation factor and a delay variable, and the sound pressure of each signal at the point X1 satisfies follows,

$$HLA_i \text{ related path: } XL'(k) \cdot HLA_i = XL'(k) \cdot a1 \cdot e^{-j2\pi kd1/N}$$
$$HRA_h \text{ related path: } XR'(k) \cdot HRA_h = X'(k) \cdot a2 \cdot e^{-j2\pi kd2/N}$$
$$HLA_h \text{ related path: } XL'(k) \cdot HLA_h = XL'(k) \cdot a3 \cdot e^{-j2\pi kd3/N}$$
$$HRA_i \text{ related path: } XR'(k) \cdot HRA_i = XR'(k) \cdot a4 \cdot e^{-j2\pi kd4/N}$$

$$\text{Equation 6}$$

wherein,

$N$ , the numbers of sampling points under short-time Fourier transform (STFT) process;
$k$ , the $k$-th frequency point, and $k \in [0, N - 1]$;
$d1, d2, d3$ and $d4$ , the duration, or the delay, for the signals from one speaker to the corresponding point X1, the unit is the number of sampling points under a certain sampling rate;
$a1$ , $a2, a3$ and $a4$ , the amplitude attenuation factors at the point X1 for sound pressure of the corresponding signals.

4. The method for soundstage extension based on the method HRTF- in accordance with the claim 3, comprising: wherein the relative-quantity approximation is that taking amplitude and phase of reference signal as benchmark, the sound pressure of each signal at the point X1 is further simplified by removing the same amount of the phase, and retaining only the difference part, thus for the reference signal itself, the delay variable and the attenuation factor satisfy follows,

$$dr = 0$$
$$ar = 1$$

$$\text{Equation 7}$$

where the letter $r$ represents the reference signal, and accordingly the delay and attenuation factors of other each signal is determined with respect to the reference signal.

5. The method for soundstage extension based on the method HRTF- in accordance with the claim 1, comprising: defining a connection line between the two speakers as a baseline, and considering the baseline and geometry structure among head and each speaker, accordingly the method HRTF- has three scenarios: intra-baseline symmetry type, intra-baseline asymmetry type, extra-baseline asymmetry type;

(1) the intra-baseline symmetry type: the head is near the central axis of the baseline;

the relationships among the TPOTA sub-segment $HLA_i$, $HLA_h$, $HRA_i$, $HRA_h$ satisfy,

$$HLA_i = HRA_i$$
$$HLA_h = HRA_h$$

$$\text{Equation 8}$$

taking the path of the ipsilateral signal as the reference, combining Equations 7-8, the de-crosstalk algorithm at the point X1 is as follows:

$$XL'(k) + XR'(k) \cdot a \cdot e^{-j2\pi kd/N} = XL(K)$$
$$XR'(k) + XL'(k) \cdot a \cdot e^{-j2\pi kd/N} = XR(K)$$

$$\text{Equation 9}$$

wherein,
XL and XR, the desired audio signals in frequency domain, herein set as the digital audio input signals;
$XL'$ and $XR'$, the audio output signals in frequency domain, or the solution to be solved and the signals finally fed to the speakers;
$a$ , the amplitude attenuation factor of the contralateral signal at the intersection-point X1 with respect to the reference;
$d$ , the delay variable of the contralateral signal at the intersection-point X1 with respect to the reference;

(2) the intra-baseline asymmetry type;

the head is in the right side of the baseline and taking $HRA_i$ related path as the reference, the de-crosstalk algorithm is as follows,

$$\left.\begin{array}{l} XL'(k) \cdot a1 \cdot e^{-j2\pi kd1/N} + XR'(k) \cdot a2 \cdot e^{-j2\pi kd2/N} = XL(K) \\[2mm] XR'(k) + XL'(k) \cdot a3 \cdot e^{-j2\pi kd3/N} = XR(K) \end{array}\right\} \quad \text{Equation 10}$$

wherein,
$a1$ and $1$ , the amplitude attenuation factor and the delay variable for $HLA_i$ related path with respect to the reference path;
$a2$ and $2$ , the amplitude attenuation factor and the delay variable for $HRA_h$ related path with respect to the reference path;
$a3$ and $3$ , the amplitude attenuation factor and the delay variable for $HLA_h$ related path with respect to the reference path;

(3) the extra-baseline asymmetry type;

the head is to the right side of the baseline and taking $HRA_h$ related path as the reference, the de-crosstalk algorithm is as follows,

$$\left.\begin{array}{l} XL'(k) \cdot a1 \cdot e^{-j2\pi kd1/N} + XR'(k) = XL(K) \\[2mm] XL'(k) \cdot a3 \cdot e^{-j2\pi kd3/N} + XR'(k) \cdot a4 \cdot e^{-j2\pi kd4/N} = XR(K) \end{array}\right\} \quad \text{Equation 11}$$

wherein,
$a1$ and $1$ , the amplitude attenuation factor and the delay variable for $HLA_i$ related path with respect to the reference path;
$a3$ and $3$ , the amplitude attenuation factor and the delay variable for $HLA_h$ related path with respect to the reference path;
$a4$ and $4$ , the amplitude attenuation factor and the delay variable for $HRA_i$ related path with respect to the reference path.

6. An apparatus for soundstage expansion, comprising: an audio data input unit, an audio signal processing unit, and a stereo playback unit, wherein:

(1) the audio signal input unit comprising: a basic input interface configured to receive wired analog audio signals from external devices; and an extended input interface configured to receive digital audio signals from wireless signal sources or pre-stored digital audio signals from non-volatile memory; the basic input interface is connected to an analog-to-digital converter module in the downstream audio signal processing unit, and the extended input interface is connected to a data input interface of the audio signal processing unit;
(2) the audio signal processing unit includes one or more programmable signal processing circuits, the programmable signal processing circuit adopts a dual-programmable-signal-processor architecture, which consists of: (i) a main processing module configured to execute audio signal processing algorithms and operably implement an audio signal processing pipeline via the audio data channel; (ii) a control module configured to manage the operational state of the main processing module and handle user interactions; (iii) an interaction channel configured for the control module to issue commands to the main processing module;
(3) the stereo playback unit comprising: two basic configuration speaker modules and configured extended speaker modules, wherein the basic configuration speaker module comprising: a power amplifier circuit connected to an upstream digital-to-analog conversion module, and an electroacoustic transducer connected to said power amplifier circuit; the two speaker modules are respectively designated for processing left-channel and right-channel signals, the configured extended speaker modules have identical functional structures as the basic configuration speaker modules to form a multi-channel output array, and each configured extended speaker module operates as an independent output channel, Wherein the programmable signal processing circuit is processed according to the method of soundstage extension using method HRTF- in accordance with any one of claims 1-5.

SPK-L

SPK-R

$HL_h$   $HR_h$

$HL_i$   $HR_i$

XO $X0$

FIG. 1

The input stereo audio signals, XL, XR
(in frequency domain)

Decoupling the WID sub-segment, intersecting
and superposition in the vicinity to the pinnae

Simplifying the frequency response by means of
relative- quantity approximation

$a_i, d_i$

Optionally adopting divide-and-conquer method for
solving the complex polynomials equations

The optional filters implemented directly in frequency
domain for post EQ

Generating the output signals XL', XR'

Intersecting and superposition
in the vicinity to the pinnae

The desired audio signals XL, XR
synthesized

The phase of the digital signal processing

The phase of the audio signal
travelling over the air

FIG. 2

audio signal input unit

Audio processing unit   |   ADC

DSP

HRTF- module

MCU

DAC

stereo audio playback unit

FIG. 3

SPK-L          SPK-R

BL

HLA$_h$   HRA$_h$

HLA$_i$   HRA$_i$

X1   X1

① ②

FIG. 4

FIG. 5

FIG. 6

Europäisches
Patentamt

European
Patent Office

Office européen
des brevets

## PARTIAL EUROPEAN SEARCH REPORT

under Rule 62a and/or 63 of the European Patent Convention.
This report shall be considered, for the purposes of
subsequent proceedings, as the European search report

**Application Number**

EP 25 18 5689

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KI-SEUNG LEE ET AL: "A real-time audio system for adjusting the sweet spot to the listener's position", IEEE TRANSACTIONS ON CONSUMER ELECTRONICS, IEEE SERVICE CENTER, NEW YORK, NY, US, vol. 56, no. 2, 1 May 2010 (2010-05-01), pages 835-843, XP011312745, ISSN: 0098-3063 * paragraphs [000I], [00IV]; figures 1,2 * | 1-6 | INV. H04S3/00 H04S7/00 |
| A | XU HUAXING ET AL: "An improved free-field cross-talk cancellation method based on the spherical head model", APPLIED ACOUSTICS, ELSEVIER PUBLISHING, GB, vol. 123, 16 March 2017 (2017-03-16), pages 47-54, XP029972071, ISSN: 0003-682X, DOI: 10.1016/J.APACOUST.2017.03.003 * paragraph [0003] * * figures 1,2 * | 1-6 | |

-----

-/--

**TECHNICAL FIELDS SEARCHED (IPC)**

H04S

## INCOMPLETE SEARCH

The Search Division considers that the present application, or one or more of its claims, does/do not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| Munich | 9 January 2026 | Krembel, Luc |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
..........................................................................................
& : member of the same patent family, corresponding
   document

EPO FORM 1503 03.82 (P04E07)

page 1 of 2

Europäisches
Patentamt

European
Patent Office

Office européen
des brevets

**PARTIAL EUROPEAN SEARCH REPORT**

Application Number

EP 25 18 5689

| | DOCUMENTS CONSIDERED TO BE RELEVANT | | CLASSIFICATION OF THE APPLICATION (IPC) |
|---|---|---|---|
| Category | Citation of document with indication, where appropriate, of relevant passages | Relevant to claim | |
| A | WILLIAM G GARDNER: "3D Audio and Acoustic Environment Modelling", INTERNET CITATION, 18 April 1999 (1999-04-18), pages 1-9, XP002492599, Retrieved from the Internet: URL:http://www.harmony-central.com/Computer/Programming/3d-audio.pdf [retrieved on 2008-08-19] * paragraph [0004]; figure 5 * ----- | 1-6 | |
| | | | **TECHNICAL FIELDS SEARCHED** (IPC) |

EPO FORM 1503 03.82 (P04C10)

page 2 of 2

Europäisches
Patentamt

European
Patent Office

Office européen
des brevets

**INCOMPLETE SEARCH
SHEET C**

```
Claim(s) completely searchable:
        5, 6

Claim(s) searched incompletely:
        1-4

Reason for the limitation of the search:

The search has been restricted to the subject-matter indicated in your
letter of observations of 23-12-2025 filed in reply to the invitation
pursuant to Rule 63(1) EPC. See further the comments on these
observations provided in the European search opinion.
```